(19) Europäisches Patentamt / European Patent Office / Office européen des brevets

(11) **EP 3 825 116 A1**

(12) **EUROPEAN PATENT APPLICATION**

(43) Date of publication:
26.05.2021 Bulletin 2021/21

(51) Int Cl.:
**B32B 5/12** (2006.01)  **B32B 5/26** (2006.01)

(21) Application number: **19210145.9**

(22) Date of filing: **19.11.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **SABIC Global Technologies B.V.**
**4612 PX Bergen op Zoom (NL)**

(72) Inventors:
• **KULKARNI, Sandeep**
**4612 PX Bergen op Zoom (NL)**

• **MUHAMMAD, Kashif Syed**
**4612 PX Bergen op Zoom (NL)**
• **THEOFANOUS, Theofanis**
**4612 PX Bergen op Zoom (NL)**
• **VERGHESE, Nikhil**
**4612 PX Bergen op Zoom (NL)**

(74) Representative: **J A Kemp LLP**
**14 South Square**
**Gray's Inn**
**London WC1R 5JJ (GB)**

(54) **PORTABLE ELECTRONIC DEVICE HOUSINGS HAVING LAMINATE PLATES AND SIDEWALLS AND METHODS OF MAKING THE SAME**

(57) A portable electronic device housing can comprise a plate laminate and a rim comprising one or more rim laminates. Each of the plate and rim laminates comprises two or more laminae, each including fibers dispersed in a matrix material. The fibers include fibers aligned in a first direction, fibers aligned in a second direction that is perpendicular to the first direction, fibers aligned in a third direction that is angularly disposed relative to the first direction by a first angle that is between 10 and 85 degrees, and/or fibers aligned in a fourth direction that is angularly disposed relative to the first direction by a second angle that is equal and opposite to the first angle. For each of the plate and rim laminates, at least one lamina includes fibers aligned in the first direction and at least one lamina includes fibers aligned the second, third, or fourth directions.

FIG. 1A

EP 3 825 116 A1

**Description**

**TECHNICAL FIELD**

The present invention relates generally to portable electronic device housings and more particularly, but without limitation, to housings having a plate laminate and a sidewall including a rim that comprises one or more rim laminates.

**BACKGROUND**

Portable electronic devices such as mobile phones, tablets, watches, laptops, and the like typically comprise a housing to contain and protect electronic components thereof. Portable electronic device housings should have adequate stiffness and impact resistance to sustain impacts during everyday use, such as when the electronic device is dropped. And, at least a portion of the housing generally must be radiofrequency (RF) transparent to permit transmission of electromagnetic signals through the housing and/or wireless charging. Some housings incorporate metallic materials to achieve adequate strength; however, such materials may not be RF transparent and thus cannot be used to define all of the housing. Metallic housings may also impose restrictions on where certain portable electronic device components (e.g., antennas and/or inductive chargers) can be placed. There accordingly is a need in the art for portable electronic device housings that can provide suitable stiffness and impact resistance while providing RF transparency over at least a portion of the housing.

**SUMMARY**

Some of the present housings address this need in the art by including a plate comprising a plate laminate and a sidewall comprising one or more rim laminates, the plate and rim laminates each comprising two or more laminae that each comprises fibers dispersed in a matrix material. The plate and rim laminates can each have fibers aligned in at least two different directions: the fibers of the laminae can include fibers aligned in a first direction (a lengthwise direction, for the plate laminate, and a circumferential direction, for the rim laminate(s)) and at least one of: (1) fibers aligned in a second direction that is perpendicular to the first direction (a widthwise direction, for the plate laminate, and a binormal direction, for the rim laminate(s)), (2) fibers aligned in a third direction that that is angularly disposed relative to the first direction by a first angle that is between 10 and 85 degrees, and (4) fibers aligned in a fourth direction that is angularly disposed relative to the first direction by a second angle that is equal and opposite to the first angle.

Such a combination of fibers can promote the housing's impact resistance and stiffness. For example, fibers aligned in the first direction may tend to promote the housing's resistance to bending, while fibers aligned in the third or fourth directions may tend to promote the housing's resistance to torsion. For each of the plate and rim laminates, lamina(e) that include fibers aligned in the first direction can be positioned in outer sections of the laminate with other laminae disposed therebetween; this can further promote the housing's bending resistance. And when the plate laminate includes fibers aligned in the third and fourth directions, those fibers may be oriented such that the loads the housing may typically experience at its corners (e.g., when dropped) are absorbed by the fibers in tension or compression to mitigate damage to the housing. The fibers of the plate laminate and/or of the rim laminate(s) can be selected such that the laminate is RF transparent to permit the transmission of signals and/or wireless charging through the housing.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified - and includes what is specified; e.g., substantially 90 degrees includes 90 degrees and substantially parallel includes parallel - as understood by a person of ordinary skill in the art. In any disclosed embodiment, the terms "substantially" and "about" may be substituted with "within [a percentage] of' what is specified, where the percentage includes 0.1, 1, 5, and 10 percent.

The terms "comprise" and any form thereof such as "comprises" and "comprising," "have" and any form thereof such as "has" and "having," and "include" and any form thereof such as "includes" and "including" are open-ended linking verbs. As a result, an apparatus that "comprises," "has," or "includes" one or more elements possesses those one or more elements, but is not limited to possessing only those elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/include/have - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

Further, a device or system that is configured in a certain way is configured in at least that way, but it can also be configured in ways other than those specifically described.

The feature or features of one embodiment may be applied to other embodiments, even though not described or illustrated, unless expressly prohibited by this disclosure or the nature of the embodiments.

Some details associated with the embodiments described above and others are described below.

## BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.

**FIG. 1A** is a perspective view of an example portable electronic device housing that comprises a plate and a sidewall having a rim, the plate and rim each comprising one or more laminates.

**FIG. 1B** is an exploded view of the housing of FIG. 1A.

**FIGs. 1C** and **1D** are top and bottom views, respectively, of the housing of FIG. 1A.

**FIGs. 1E** and **1F** are front and side views, respectively, of the housing of FIG. 1A.

**FIG. 1G** is an exploded view of the plate laminate of the housing of FIG. 1A and shows the lay-up thereof. The plate laminate includes 0-degree and 90-degree unidirectional laminae.

**FIG. 1H** is an exploded view of one of the rim laminates of the housing of FIG. 1A and shows the lay-up thereof. The rim laminate includes 0-degree and 90-degree unidirectional laminae.

**FIGs. 2A-2C** are top, side, and front views, respectively, of a housing substantially similar to the housing of FIG. 1A, the primary exception being that the plate laminate includes off-axis unidirectional laminae and does not include 90-degree unidirectional laminae.

**FIGs. 2D** and **2E** are exploded views of the plate laminate and one of the rim laminates, respectively, of the housing of FIG. 2A and show the lay-ups thereof.

**FIGs. 3A-3C** are top, side, and front views, respectively, of a housing substantially similar to the housing of FIG. 1A, the primary exception being that each of the rim laminates includes off-axis unidirectional laminae and does not include 90-degree unidirectional laminae.

**FIGs. 3D** and **3E** are exploded views of the plate laminate and one of the rim laminates, respectively, of the housing of FIG. 3A and show the lay-ups thereof.

**FIGs. 4A** and **4C** are top, side, and front views, respectively, of a housing substantially similar to the housing of FIG. 1A, the primary exception being that the plate laminate and rim laminates each comprises off-axis unidirectional laminae and does not include 90-degree unidirectional laminae.

**FIGs. 4D** and **4E** are exploded views of the plate laminate and one of the rim laminates, respectively, of the housing of FIG. 4A and show the lay-ups thereof.

**FIG. 5** is a partial cross-sectional end view of the housing of FIG. 1A taken along line 5-5 of FIG. 1C.

**FIGs. 6A** and **6B** are cross-sectional views of a mold that can be used in some of the present methods to form one or more polymeric connecting members of a sidewall that connect the rim to the plate.

**FIGs. 7A** and **7B** illustrate a four-point bending test and a torsion test, respectively, that were simulated to assess the performance of some of the present housings.

**FIG. 8** is a graph illustrating the results of the simulation of FIG. 7A and 7B.

## DETAILED DESCRIPTION

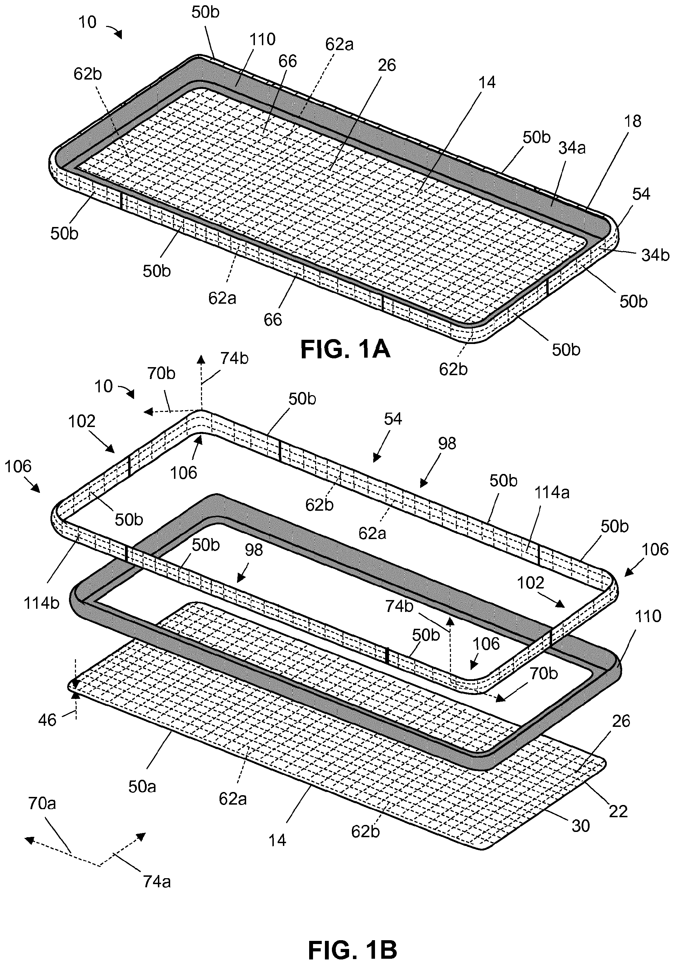

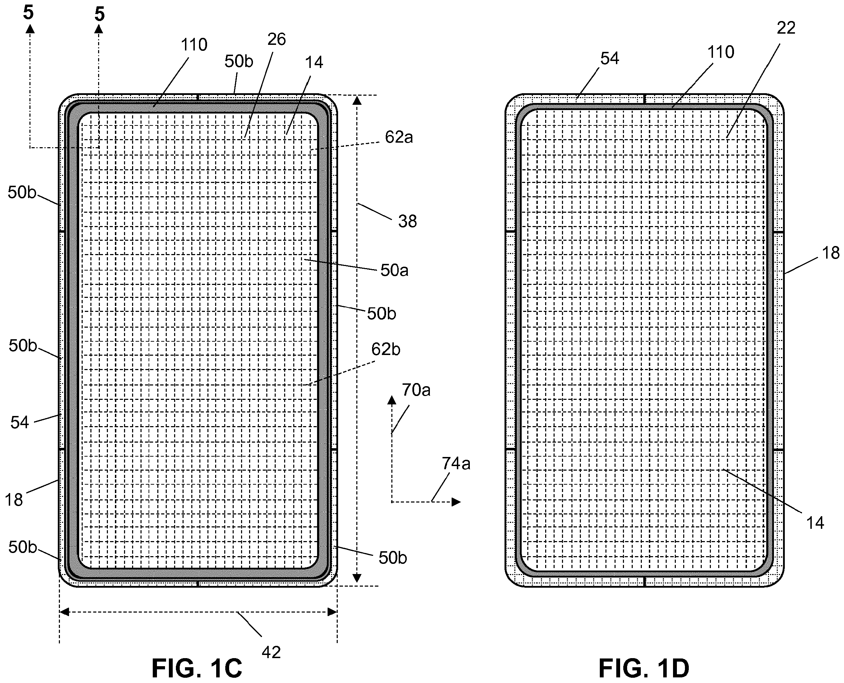

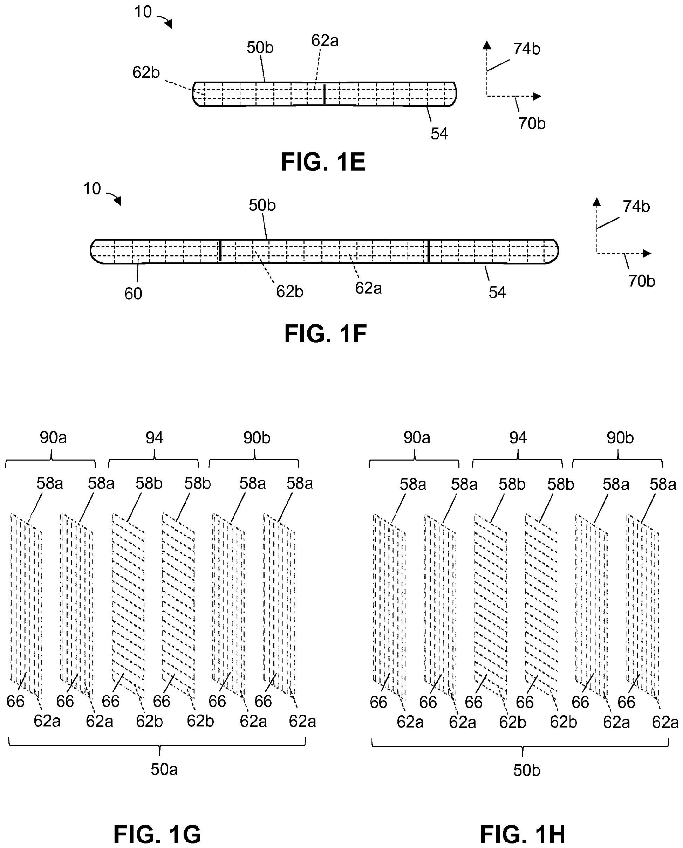

Referring to FIGs. 1A and 1B, shown is a portable electronic device housing 10 that can comprise a plate 14 and a sidewall 18. Plate 14 can define opposing front and back major surfaces, 22 and 26, respectively, and an edge 30 extending between the front and back major surfaces. Sidewall 18 can be connected to plate 14 such that the sidewall surrounds at least a majority (up to and including all) of a periphery of the plate and extends away from back major surface 26 of the plate. That sidewall 18 can be so disposed whether it contacts plate 14 on front major surface 22, back major surface 26, and/or edge 30. Sidewall 18 can define opposing interior and exterior surfaces 34a and 34b and housing 10 can define a cavity (e.g., that is faced by the interior surface of the sidewall) configured to receive electronic components of a portable electronic device, such as a logic board, processors (e.g., one or more CPUs, microcontrollers, field effect gate arrays, and/or the like), system memory, data storage devices (e.g., solid state or hard drive), speakers, wireless modems, antennas, batteries, and/or the like. Such components can be secured within housing 10 using any suitable means, such as screws, clips, rivets, and/or adhesive (e.g., a curable polymer adhesive). Thermally-conductive paste or grease can be disposed between an electronic component and housing 10. A cover (e.g., a clear glass or polymeric cover through which an electronic display of the portable electronic device can be viewed) can be attached to housing 10 to enclose the cavity (e.g., with fasteners such as screws, clips, or rivets, or with an adhesive such as a curable polymer adhesive) with electronic components disposed in the cavity.

Housing 10 can have any suitable shape and size to promote ergonomics and to protect electronic components that are received therein. For example, referring additionally to FIG. 1C, housing 10 can have a maximum length 38 and a maximum width 42 that is perpendicular to and less than or equal to any one of, or between any two of: 90%, 80%, 70%, 60%, 50%, or 40% (e.g., less than or equal to 60%) of the maximum length. A minimum thickness 46 of plate 14, measured between front and back major surfaces 22 and 26, can be greater than or equal to any one of, or between any two of: 0.50, 0.75, 1.00, 1.25, 1.50, 1.75, 2.00, 2.25, or 2.50 mm (e.g., between 0.50 and 2.50 mm or between 0.80 and 1.40 mm). Such a thickness can promote stiffness and impact resistance.

Plate 14 and sidewall 18 can comprise one or more materials selected to achieve a suitable impact resistance, stiffness, and, optionally, RF transparency. As shown, plate 14 comprises a plate laminate 50a and sidewall 18 includes a rim 54-which can be disposed along at least a majority (up to and including all) of the periphery of plate 14-that comprises one or more rim laminates 50b. Each of laminates 50a and 50b can include two or more laminae (e.g., 58a-58d), such as greater than or equal to any one of, or between any two of: 2, 3, 4, 5, 6, 7, 8, 9, or 10 laminae, where each of the laminae comprises fibers (e.g., 62a-62d) (e.g., continuous fibers) dispersed within a polymeric matrix material (e.g., 66).

Referring additionally to FIGs. 1C-1H, 2A-2E, 3A-3E, and 4A-4E, laminates 50a and 50b can each have a selection and lay-up of laminae through which housing 10 can achieve a relatively high impact- and deflection-resistance. To illustrate, for each of laminates 50a and 50b, the fibers of each of the laminae can include: (1) fibers 62a aligned in or disposed within 30 degrees of parallel to a first direction (e.g., 70a or 70b), (2) fibers 62b aligned in a second direction (e.g., 74a or 74b) that is perpendicular to the first direction, (3) fibers 62c aligned in a third direction (e.g., 78a or 78b) that is angularly disposed relative to the first direction by a first angle 86a that is between 10 and 85 degrees, such as greater than or equal to any one of or between any two of 10, 25, 40, 55, 70, or 85 degrees, and/or (4) fibers 62d aligned in a fourth direction (e.g., 82a or 82b) that is angularly disposed relative to the first direction by a second angle 86b that is equal and opposite to the first angle. As used herein, "aligned" means within 10 degrees of parallel and the angle between two fiber directions is the smallest such angle (neglecting its sign). The fiber directions can but need not be linear. For example, for the laminae of plate laminate 50a, first direction 70a can be parallel to housing 10's length 38 and second direction 74a can be parallel to the housing's width 42, while for the laminae of each of rim laminate(s) 50b first direction 70b can be a circumferential direction disposed along sidewall 18 and second direction 74b can be a binormal direction that is perpendicular to the circumferential definition. As an illustration, fibers 62a of a rim laminate 50b can be aligned in circumferential direction 70b even if those fibers change direction with respect to length 38 and width 42 of housing 10, such as if the rim laminate is shaped to define a corner of the housing such that the laminate defines both a widthwise portion and a lengthwise portion of rim 54.

Such advantageous impact- and deflection-resistance can be achieved when, for each of laminates 50a and 50b, at least one of the laminate's laminae includes fibers 62a aligned in the first direction and at least one of the laminate's laminae includes fibers (e.g., 62b-62d) aligned in a direction that is angularly disposed relative to the first direction (e.g., when the laminate is a "multiaxial" laminate). As an example, at least two of the laminae can be unidirectional laminae (e.g., a lamina whose fibers are aligned in a single direction) having different fiber directions (e.g., at least one lamina with fibers 62a aligned in the first direction and at least one lamina with fibers aligned in the second, third, or fourth directions) and/or at least one of the laminae can be a woven lamina whose fibers are aligned in two or more fiber directions (e.g., two or more of those listed above, such as a lamina including fibers 62a and at least one of fibers 62b, 62c, and 62d).

Referring particularly to FIGs. 1C-1H, for example, plate laminate 50a and rim laminate(s) 50b can each comprise at least one lamina 58a including fibers 62a disposed within 30 degrees of parallel to or aligned in the first direction and at least one lamina 58b including fibers 62b aligned in the second direction. Each of the laminae can be a unidirectional lamina, where each of lamina(e) 58a-with fibers 62a aligned in the first direction-is a 0-degree unidirectional lamina and each of lamina(e) 58b-with fibers 62b aligned in the second direction-is a 90-degree unidirectional lamina.

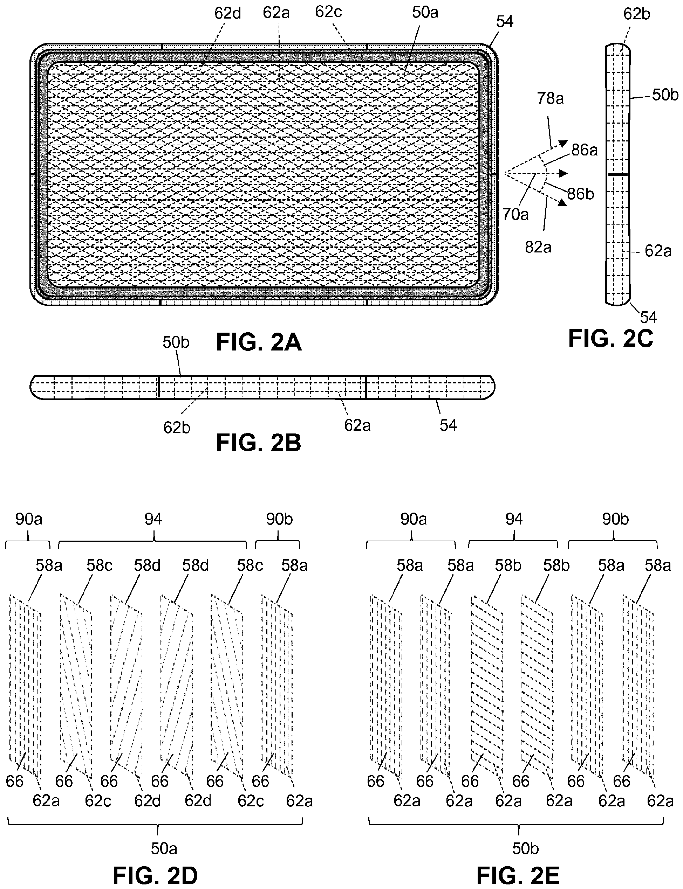

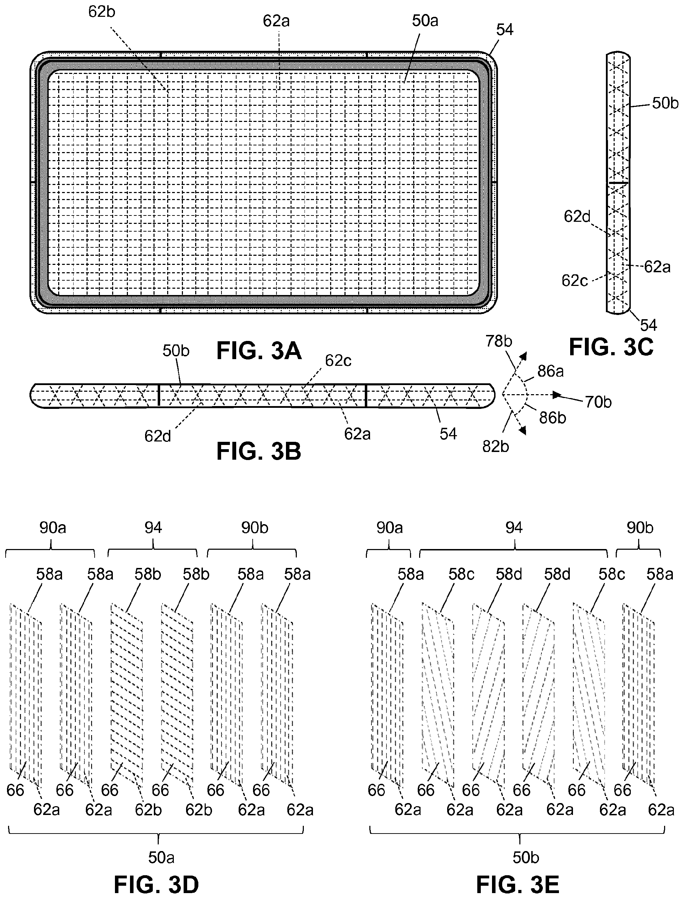

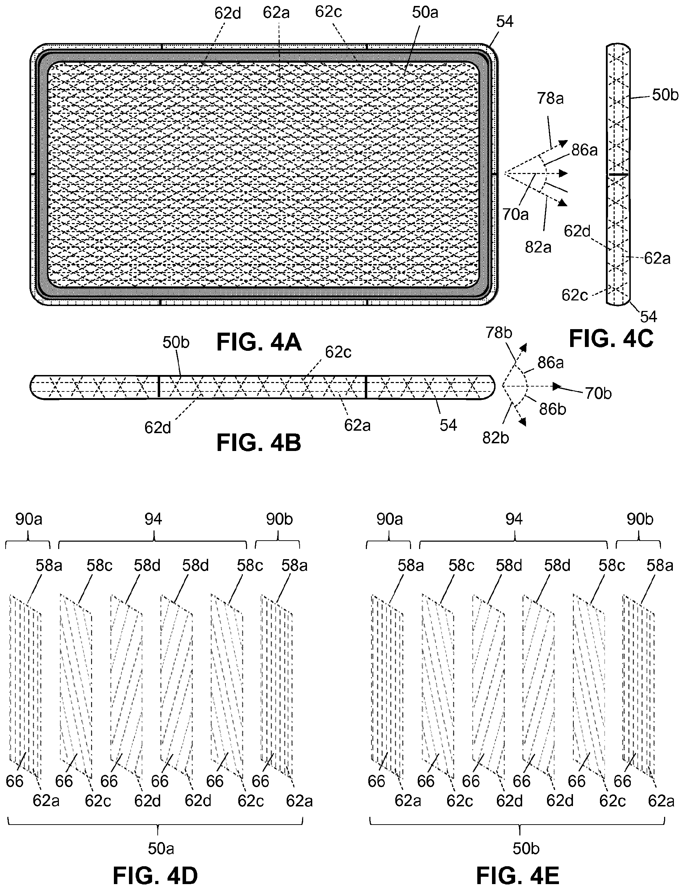

To promote housing 10's resistance to deformation when subjected to torsion loads, for at least one of plate laminate 50a and rim laminate(s) 50b, at least one of the laminae can be an off-axis lamina 58c that includes fibers 62c aligned in the third direction (e.g., 78a or 78b) and/or at least one of the laminae can be an off-axis lamina 58d that includes fibers 62d aligned in the fourth direction (e.g., 82a or 82b). To illustrate, plate laminate 50a alone (FIGs. 2A-2E), rim laminate(s) 50b alone (FIGs. 3A-3E), or both the plate and rim laminates (FIGs. 4A-4E) can include such off-axis laminae 58c and 58d in addition to one or more 0-degree laminae 58a, optionally with no laminae having fibers 62b aligned in the second direction; a laminate that does not include off-axis lamina(e) can comprise both 0-degree and 90-degree laminae 58a and 58b. Off-axis laminae 58c and 58d can each be a unidirectional lamina; in other embodiments, however, at least one of plate laminate 50a and rim laminate(s) 50b can include at least one woven lamina that comprises fibers 62c and 62d aligned in the third and fourth directions.

When plate laminate 50a includes off-axis laminae 58c and 58d, fibers 62c and 62d of those laminae can be arranged to promote housing 10's impact resistance when subjected to loads at, for example, its corners. To illustrate, first angle 86a-the angle between first direction 70a and third direction 78a can be greater than or equal to any one of, or between any two of, 15, 20, 25, 30, 35, 40, or 45 degrees (e.g., between 15 and 45 degrees), optionally such that the angle is within 10 degrees of the arctangent of housing 10's width 42 divided by the housing's length 38; second angle 86b-the angle between the first direction and fourth direction 82a-can be equal and opposite to those angles. In this manner, fibers 62c and 62d of off-axis laminae 58c and 58d can be positioned such that they are aligned in directions in which loads are likely to be transferred to plate laminate 50a when housing 10 is dropped, thereby allowing those fibers to absorb such loads in tension or compression to mitigate damage to the housing. And when each of rim laminate(s) 50b includes off-axis laminae 58c and 58d, those laminae can promote sidewall 18's shear stiffness, particularly where an opening is defined through the sidewall (e.g., to accommodate one or more buttons and/or the like of the portable electronic device).

Because for each of laminates 50a and 50b the laminate may be susceptible to bending along the first direction (e.g., because that may be the longest dimension thereof), the laminae of the laminate can be arranged in a manner that mitigates such bending. For example, at least one of laminates 50a and 50b can include first and second outer sections 90a and 90b disposed on opposing sides of an inner section 94. At least one-up to and including each, such as a majority-of the lamina(e) (e.g., 58a) having fibers aligned in the first direction can be disposed in outer sections 90a and 90b and at least one-up to and including each, such as a majority-of the lamina(e) (e.g., 58b, 58c, and/or 58d) having fibers aligned in the second, third, and/or fourth directions can be disposed within the inner section. And a laminate having laminae 58a and 58b with fibers 62a and 62b aligned in the first and second directions, respectively, can include an appropriate amount of fibers 62a aligned in the first direction relative to fibers 62b aligned in the second direction to mitigate bending; for example, a volume of fibers 62b in the laminate can be less than or equal to any one of or between any two of 150%, 125%, 100%, 75%, 50%, or 25% (e.g., between 25% and 150%, such as between 25% and 50%) a volume of fibers 62a in the laminate. In this manner, plate laminate 50a and rim laminate(s) 50b, with their laminae and lay-ups thereof, can promote housing 10's bending resistance.

The present laminates can also include non-woven laminae comprising discontinuous fibers-such as those having fibers arranged in a mat-which do not have a fiber direction, and/or laminae not including fibers. However, laminates 50a and 50b need not include such non-woven or fiberless laminae, and can each consist only of laminae whose fibers are aligned in the first, second, third, and/or fourth directions. And in some embodiments in which at least one of plate laminate 50a and rim laminate(s) 50b includes off-axis laminae with fibers 62c and/or 62d arranged in the third and/or fourth directions, respectively, for each of the laminate(s) including such off-axis laminae none of the laminae of the laminate have fibers aligned in the second direction. Laminates consisting only of laminae 58a, 58b, 58c, and/or 58d can better resist deflection and damage while maintaining a relatively low thickness, which is desirable in portable electronic device applications.

The fibers of each of fiber-reinforced laminae (e.g., 58a-58d) of laminates 50a and 50b can include any suitable fibers, such as glass fibers, ceramic fibers, carbon fibers, aramid fibers, polyethylene fibers, polyester fibers, polyamide fibers, basalt fibers, steel fibers, and/or the like. Plate laminate 50a can include the same type of fibers as or a different type of fibers than rim laminate(s) 50b. To facilitate wireless charging through plate 14 and/or to permit wireless transmissions therethrough, the fibers of plate laminate 50a can be of a type that permits the plate to be RF transparent, such as glass fibers and/or ceramic fibers. As a result, a dielectric constant of plate laminate 50a at 10 GHz can be greater than or equal to any one of, or between any two of: 2.5, 3.0, 3.5, 4.0, 4.5, 5.0, and 5.5 (e.g., between 2.5 and 3.5).

The fibers of rim laminate(s) 50b can but need not permit such RF transparency; for example, those fibers can include carbon fibers, aramid fibers, glass fibers, and/or ceramic fibers.

Matrix material 66 of each of the laminae can comprise, for example, a thermoplastic and/or thermoset material. A suitable thermoplastic material can include polycarbonate (PC), polybutylene terephthalate (PBT), or a combination thereof. A laminate can have improved crack resistance and impact resistance when the matrix material of at least some of its laminae comprises a PBT/PC blend, compared to PC or PBT alone. PBT/PC matrix materials can be cost-effective and can provide a suitable fire resistance and color-neutrality for portable electronic device applications. For example, a PBT/PC matrix material can satisfy the UL 94 V-2 flammability standard, as described in UL 94 - Standard for Tests for Flammability of Plastic Materials for Parts in Devices and Appliances by UL Standards (6th ed., March 34, 2013), which is hereby incorporated by reference.

Suitable PCs-whether or not included in a PBT/PC blend-may be sustainable. Such a PC can be, for example, post-consumer or post-industrial recycled PC. Further, such a PC can be bio-sourced; to illustrate, the PC can be synthesized using bio-sourced monomers or pre-monomer chemical compounds (e.g., bio-benzene, bio-phenol, and/or the like). So too, may suitable PBTs be sustainable. For example, a suitable PBT may be one synthesized using monomers (e.g., terephthalic acid) recovered by chemically decomposing recycled polyethylene terephthalate, such as that from bottles (e.g., VALOX iQ™ resin, commercially available from SABIC). Sustainable PCs and/or sustainable PBTs can be included in a blend; an example of such a blend is a XENOY iQ™ resin, commercially available from SABIC.

In other embodiments the matrix material of each of the laminae can comprise any suitable thermoplastic and/or thermoset composition. Other suitable thermoplastic matrix materials include, for example, polyethylene terephthalate, poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof (including blends with PC and/or PBT). Suitable thermoset matrix materials include, for example, an unsaturated polyester resin, a polyurethane, bakelite, duroplast, urea-formaldehyde, diallyl-phthalate, epoxy resin, an epoxy vinylester, a polyimide, a cyanate ester of a polycyanurate, dicyclopentadiene, a phenolic, a benzoxazine, a co-polymer thereof, or a blend thereof. A preconsolidation fiber volume fraction of each of the laminae can be greater than or equal to any one of, or between any two of: 10, 20, 30, 40, 50, 60, 70, or 80% (e.g., between 35 and 60% or between 45 and 60%). To approximate a lamina's areal weight based on its fiber volume fraction, the following equation can be used:

$$A = \left(V_f \rho_f + (1 - V_f)\rho_m\right)t$$

where $A$ is the lamina's areal weight, $V_f$ is the lamina's fiber volume fraction, $\rho_f$ and $\rho_m$ are the densities of the lamina's fibers and matrix material, respectively, and t is the lamina's thickness.

Rim 54 can comprise a single piece (e.g., a single rim laminate 50b) or two or more pieces (e.g., at least two rim laminates 50b) that are coupled together. Rim laminate(s) 50b can make up any portion (up to and including all) of rim 54-optionally such that the rim laminate(s) are disposed along at least a majority (up to and including all) of plate 14's periphery-for sidewall 18 to provide a suitable impact resistance and stiffness for housing 10. For example, rim 54 can include two lengthwise (e.g., linear) portions 98 extending in first direction 70a, two widthwise (e.g., linear) portions 102 extending in second direction 74b, and four corner portions 106 that each connects one of the lengthwise portions to one of the widthwise portions (e.g., such that the rim defines a rectangular shape that can have rounded corners). Each of laminate(s) 50b can at least partially define at least one of corner portions 106-which may regularly sustain impacts during use of a portable electronic device-and, optionally, at least a section of at least one of lengthwise portions 98 and/or at least a section of at least one of widthwise portions 102. As shown, rim 54 includes multiple pieces, each of which is a rim laminate 50b such that the rim laminates define all portions of the rim and are disposed along all of plate 14's periphery; the pieces can be joined at locations spaced apart from corner portions 106 to promote rim strength. Because corner portions 106 may regularly sustain impacts, each of the corner portions can be defined by at least two rim laminates 50b coupled such that one of the rim laminates is disposed on the interior surface of the other for reinforcement. To maintain the thinness of rim 54, for some housings at least one of such rim laminates 50b defining a corner portion 106 does not define a section of a lengthwise portion 98 or a widthwise portion 102.

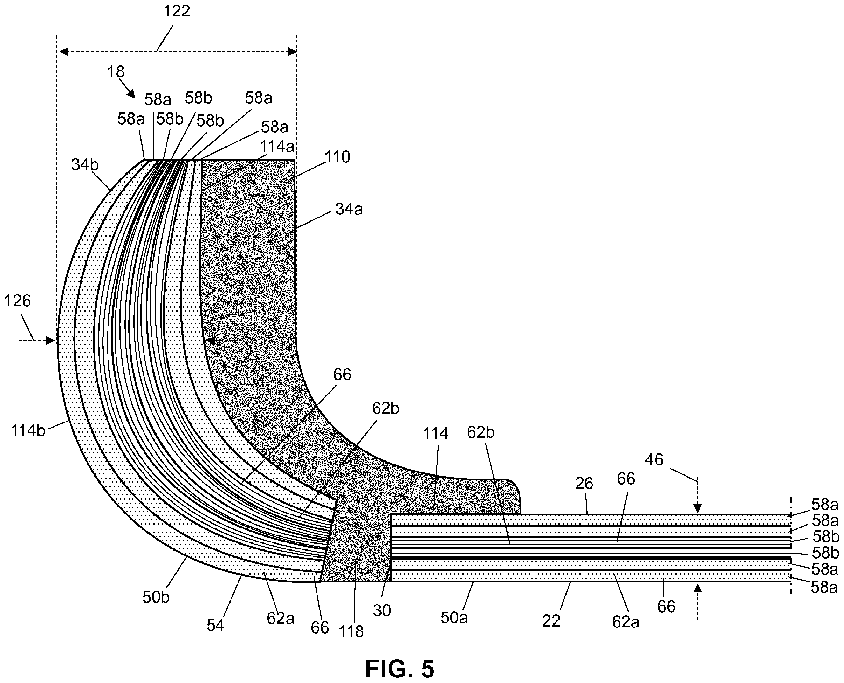

Rim 54 can be connected to plate 14 in any suitable manner, such as via an adhesive, a snap-fit, and/or overmolding. Plate laminate 50a and at least one of rim laminate(s) 50b can also be unitary (e.g., the same laminate). Referring additionally to FIG. 5, as shown sidewall 18 can comprise one or more polymeric connecting members 110 that connect rim 54 to plate 14. Rim 54 can have opposing interior and exterior surfaces 114a and 114b (e.g., with the rim's exterior surface defining exterior surface 34b of sidewall 18) and connecting member(s) 110 can be disposed on the rim's interior surface (e.g., such that the connecting member(s) define interior surface 34a of sidewall 18); in other embodiments, however, the connecting member can be disposed on the rim's exterior surface. To connect rim 54 to plate 14, connecting member(s) 110 can be in contact with front major surface 22, back major surface 26, and/or edge 30 of the plate. Connecting member(s) 110 can extend away from back major surface 26 and be disposed along at least a majority (up to and including all) of plate 14's periphery.

Connecting member(s) 110 can comprise any material suitable for transferring loads between rim 54 and plate 14 to reduce the risk of damage to housing 10 and for promoting the housing's shear stiffness. For example, each of connecting member(s) 110 can comprise any of the above-described matrix materials and can, but need not, include discontinuous or chopped fibers (e.g., any of those described above) dispersed in the matrix material such that the connecting member comprises a polymer-fiber blend. The polymer-fiber blend can have a fiber volume fraction that is greater than or equal to any one of, or between any two of: 10, 20, 30, 40, 50, 60, or 70 (e.g., between 20 and 50% or between 40 and 50%) and a fiber weight fraction that is greater than or equal to any one of, or between any two of: 10, 20, 30, 40, 50, 60, or 70 (e.g., between 40 and 80% or between 60 and 80%). Increasing the fiber volume fraction and/or fiber weight fraction can increase the tensile modulus and/or tensile strength of the polymer-fiber blend. To promote bonding between connecting member(s) 110 and rim 54 and/or plate 14, the matrix material of the connecting member(s) can be the same as that of laminates 50a and/or 50b. For example, each of connecting member(s) 110 can comprise a PBT/PC matrix material, with or without discontinuous fibers dispersed therein.

The geometry of rim 54 and connecting member(s) 110 can also facilitate load transfer and bonding. For example, each of connecting member(s) 110 can define a recess 114 that receives plate 14 such that a portion 118 of the connecting member is coplanar with the plate and is disposed between the plate and the rim 54. Coplanar portion 118 of each of connecting member(s) 110 can promote bonding and absorb loads during an impact to mitigate damage to the rim 54. Interior surface 114a of rim 54 can also define one or more recessed channels in which a portion of each of connecting member(s) 110 is received and/or can define one or more protrusions to increase the bonding area between the connecting member and the rim. For some housings, plate 14 and rim 54 can be connected via a means other than connecting member(s) 110 (e.g., that is sufficient, alone, to bond the plate and rim); the connecting member(s) can still be included in sidewall 18 to promote shear stiffness.

To promote aesthetics, ergonomics, impact resistance, and stiffness, a thickness 122 of sidewall 18, measured between interior and exterior surface 34a and 34b, can be greater than or equal to any one of, or between any two of, 2.5, 2.7, 2.9, 3.1, 3.3, 3.5, 3.7, 3.9, or 4.1 mm, with a thickness 126 of rim 54, measured between interior and exterior surfaces 114a and 114b, being greater than or equal to any one of, or between any two of, 0.6, 0.8, 1.0, 1.5, 2.0, 2.5, 3.0, 3.5, or 3.7 mm (e.g., between 1.8 and 2.6 mm).

Plate 14 can also, but need not, include one or more layers to promote the aesthetics of housing 10. For example, plate 14 can include a translucent layer that defines at least a majority (up to and including all of) front major surface 22 and comprises glass, polycarbonate, an acrylate polymer (e.g., poly(methyl methacrylate)), polyethylene terephthalate, polyimide, polyethersulfone, polyethylene naphthalate, polyarylate, and/or the like. Plate 14 can also include a masking layer, such as a colored film (e.g., that is attached to and disposed between plate laminate 50a and a translucent layer) to obscure, for example, the plate laminate from view.

TABLES 1 and 2 set forth mechanical characteristics of illustrative polymer-fiber blends and laminae, respectively, that are suitable for use in some of the present housings (e.g., for laminae of laminates 50a and 50b and/or connecting member(s) 110).

**TABLE 1: Mechanical Properties of Illustrative Polymer-Fiber Blends**

| Fiber Loading | Low | Medium | High |
|---|---|---|---|
| Fiber Type | Ceramic (NEXTEL 610) | Ceramic (NEXTEL 610) | Ceramic (NEXTEL 610) |
| Fiber Volume Fraction (%) | 25 | 33 | 43 |
| Fiber Weight Fraction (%) | 50 | 60 | 70 |
| Tensile Modulus (GPa) | 26 | 31 | 36 |
| Tensile Strength (MPa) | 120 | 115 | 93 |
| Tensile Elongation at Break (%) | 1.7 | 1.7 | 1.5 |
| Flexure Modulus (GPa) | 20 | 23 | 27 |
| Flexure Strength (MPa) | 185 | 181 | 146 |

**TABLE 2: Mechanical Properties of Illustrative Laminae**

| | Unidirectional Tape | | | Fabric | |
|---|---|---|---|---|---|
| Fiber Type | S-Glass | Ceramic (NEXTEL 610) | Carbon Fiber | S-Glass | Ceramic (NEXTEL DF6) |
| Fiber Tensile Modulus (GPa) | 90 | 370 | 420 | - | - |
| Fiber Volume Fraction (%) | 47-51 | 36-38 | 46-50 | 53-58 | 50-53 |
| Tensile Modulus (GPa) | 37-40 | 135-145 | 180-190 | 30-32 | 100-110 |
| Tensile Strength (MPa) | 900-950 | 600-650 | 1200-1600 | 650-700 | 550-580 |
| Tensile Elongation at break (%) | 1.9-2.1 | 0.3-0.4 | 0.6-0.7 | 2.5-3 | 0.4-0.6 |

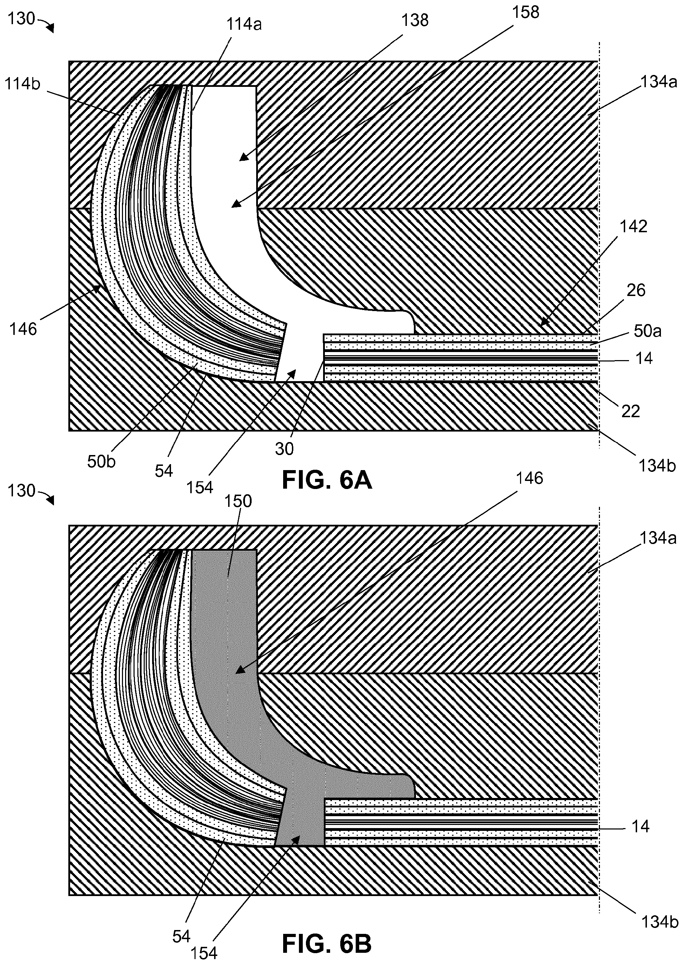

Referring to FIGs. 6A and 6B, some of the present housings (e.g., 10) can be manufactured via injection molding. Manufacturing can be performed using a mold (e.g., 130) comprising two or more mold portions (e.g., 134a and 134b) that are movable between an open position and a closed position in which the mold portions cooperate to define a mold cavity (e.g., 138). Molding surfaces of the mold portions can be shaped such that the mold cavity comprises a planar cavity portion (e.g., 142) and a peripheral channel (e.g., 146) that extends away from and is disposed along at least a majority (up to and including all) of a periphery of the planar cavity portion. The planar cavity portion can be configured to receive a plate (e.g., any of those described above, such one comprising plate laminate 50a) and/or form at least a portion of a plate.

To form the housing, some methods comprise a step of disposing a rim (e.g., 54) (e.g., comprising one or more rim laminate(s) 50b, as described above) within the mold (e.g., such that the rim is received in the peripheral channel) (FIG. 6A). A polymeric material (e.g., 150) (e.g., comprising any of the above-described matrix materials, such as PC and/or PBT) that can comprise or be free of fibers (e.g., in any of the proportions described above with reference to connecting member(s) 110) can be injected into the mold (FIG. 6B) and set to form one or more polymeric connecting members (e.g., 110) that are connected to the plate such that the connecting member(s) extend away from the plate's back major surface (e.g., 26) and are disposed along at least a majority of the plate's periphery. The rim and resulting connecting member(s) can define a sidewall (e.g., 18) that extends away from of the back major surface of the plate and is disposed along at least a majority of the plate's periphery. At least a portion of the connecting member(s) can be disposed on the back major surface and/or edge (e.g., 30) of the plate; in some instances, the connecting member(s) can be formed such that they contact the front major surface (e.g., 22), whether or not they contact the back major surface and/or edge.

The rim can be treated and/or can define one or more features to facilitate bonding between the rim and the connecting member(s). For example, an adhesive can be applied to the interior surface (e.g., 114a) of the rim and/or the interior surface can be etched (e.g., mechanically and/or chemically), laser engraved, plasma treated, and/or the like prior to the injecting. To increase the bonding area between the connecting member(s) and the rim as described above, the rim's interior surface can also define one or more recessed channels that can receive the injected polymeric material and/or can define one or more protrusions.

As shown, the plate and rim-which comprise plate laminate 50a and rim laminate(s) 50b, respectively are manufactured prior to the injection molding. The laminates of the rim and plate can be formed using a variety of techniques, including but not limited to bladder molding of pre-preg sheets, compression molding of pre-preg sheets, autoclave or vacuum bag molding of prepreg sheets, mandrel molding, wet lay-up molding of neat sheets, filament winding molding in which fiber bundles are pulled through a wet bath resin and wound over a mandrel, pultrusion or extrusion molding in which fibers saturated with wet resin are pulled or extruded through a die, or resin transfer molding and vacuum assisted resin transfer molding in which fabrics are placed into a mold and injected with fluid resin under pressure.

The rim and the plate can be positioned such that a portion (e.g., 154) of the volume in the peripheral channel is coplanar with the plate and is defined between the rim and the plate. The polymeric material can enter the coplanar volume during injecting such that each of the formed connecting member(s) defines a recess that receives the plate and comprises a portion (e.g., 118) that is coplanar with the plate and is disposed between the plate and the rim. As described above, this can increase the bonding area and can facilitate load absorption.

The pre-manufactured plate can, but need not, occupy all of a volume defined by the planar cavity portion such that the injected polymeric material enters a volume (e.g., 158) that is defined by at least a portion of the molding surfaces, the plate, and the rim and is constrained to the peripheral channel. In other embodiments, however, at least a portion of the volume defined by the planar cavity portion can be unoccupied during the injection molding such that the polymeric material can enter that volume and form at least a portion of the plate. For example, some methods comprise disposing one or more layers (e.g., the plate laminate and a translucent layer and/or a masking layer) in the mold that occupy less than all of the planar cavity portion's volume and injecting the polymeric material such that the polymeric material defines a polymeric layer that, with the other layer(s) disposed in the mold, define the housing's plate. In embodiments in which the injected polymeric material defines both the connecting member(s) and at least a portion of the plate, that portion of the plate can be integral with the connecting member(s).

In some methods, the plate need not be disposed in the mold or formed during injection molding. In such methods, the molding surfaces of the mold portions can be shaped such that the resulting sidewall-with its rim and connecting member(s)-has substantially the same shape as described above. The sidewall can be removed from the mold and the plate can thereafter be secured to the sidewall (e.g., via an adhesive and/or a snap-fit) to make the housing.

## EXAMPLES

The present invention will be described in greater detail by way of specific examples. The following examples are offered for illustrative purposes only and are not intended to limit the invention in any manner. Those of skill in the art will readily recognized a variety of noncritical parameters that can be changed or modified to yield essentially the same results.

### Example 1

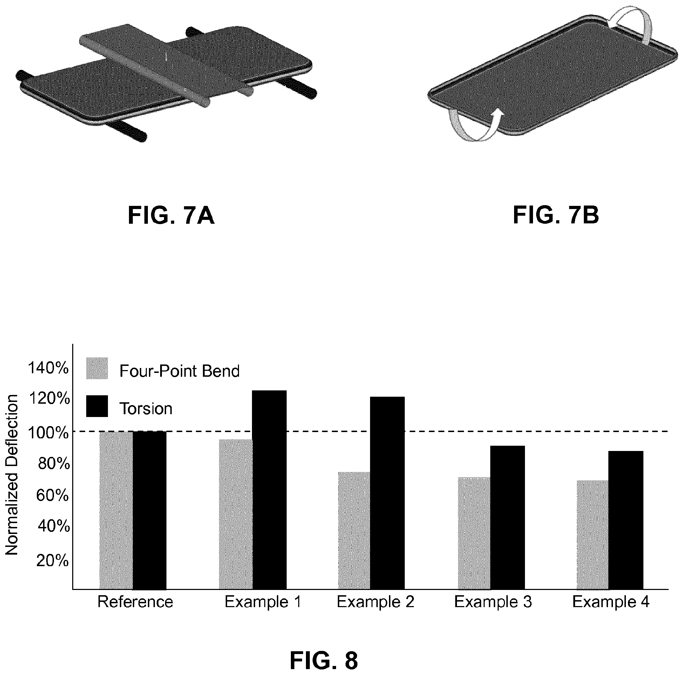

The deformation of some of the present composite housings (Examples 1-4) in a simulated four-point bending test (FIG. 7A) and in a simulated torsion load test (FIG. 7B) was assessed and compared to that of an aluminum housing (Reference). Each of the composite housings was simulated to include a plate laminate and a rim laminate, each having ten unidirectional laminae. TABLE 3 sets forth the lay-ups used for the plate and rim laminates in each of the example housings.

**TABLE 3: Composite Housing Lay-Ups**

|  | Plate Laminate Lay-Up | Rim Laminate Lay-Up |
|---|---|---|
| **Example 1** | $[0/90]_5$ | $[0/90]_5$ |
| **Example 2** | $[\theta/-\theta/0/90/0]_S$ | $[0/0/0/0/90]_S$ |
| **Example 3** | $[0/0/\theta/-\theta/0]_S$ | $[0/0/\theta/-\theta/0]_S$ |
| **Example 4** | $[0/90]_5$ | $[0/0/\theta/-\theta/0]_S$ |

The results are shown in FIG. 8. The simulation indicated that Examples 1 and 2-each having only 0-degree and 90-degree laminae for the rim laminate-would experience less deformation in bending compared to the aluminum housing, but more deformation in torsion. The inclusion of off-axis laminae in the rim (Example 3 and 4) yielded less deformation in torsion compared to the aluminum housing. Additionally, the calculated bending deformation tended to be lower when the plies having fibers aligned in the bending direction were positioned in the outer sections of the plate and/or rim laminates. Example 4, with a plate laminate comprising only 0-degree and 90-degree laminae and a rim laminate comprising only 0-degree and off-axis laminae, showed the lowest deformation in bending and torsion of the housing constructions assessed.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

### Claims

1. A portable electronic device housing comprising:

   a plate that comprises a plate laminate and defines a front major surface, a back major surface opposite the front major surface, and a periphery; and
   a sidewall that includes a rim comprising one or more rim laminates and is coupled to the plate with the sidewall disposed along at least a majority of the periphery of the plate and extending away from the back major surface of the plate in a direction opposite the front major surface of the plate;
   wherein each of the plate and rim laminates comprises two or more laminae, each including fibers dispersed in a matrix material; and
   wherein:

   for each of the plate and rim laminates:

   the fibers of at least one of the laminae include fibers that are disposed within 30 degrees of parallel to a first direction;

the fibers of at least one of the laminae include fibers that are aligned in a second direction that is perpendicular to the first direction; and

the volume of the fibers of the laminae that are aligned in the second direction is between 25% and 150% of the volume of the fibers of the laminae that are disposed within 30 degrees of parallel to the first direction;

for the laminae of the plate laminate, the first direction is parallel to a length of the housing and the second direction is parallel to a width of the housing, the width perpendicular to and less than or equal to 90% of the length; and

for the laminae of each of the rim laminate(s), the first direction is a circumferential direction disposed along the sidewall and the second direction is a binormal direction that is perpendicular to the circumferential direction.

2. The housing of claim 1, wherein:

for the plate laminate, the fibers of at least one of the laminae include fibers that are aligned with the length of the housing; and

for each of the rim laminate(s), the fibers of at least one of the laminae include fibers that are aligned with the circumferential direction.

3. A portable electronic device housing comprising:

a plate that comprises a plate laminate and defines a front major surface, a back major surface opposite the front major surface, and a periphery; and

a sidewall that includes a rim comprising one or more rim laminates and is coupled to the plate with the sidewall disposed along at least a majority of the periphery of the plate and extending away from the back major surface of the plate in a direction opposite the front major surface of the plate;

wherein each of the plate and rim laminates comprises two or more laminae, each including fibers that are dispersed in a matrix material that include:

fibers that are aligned in a first direction;

fibers that are aligned in a second direction that is perpendicular to the first direction;

fibers that are aligned in a third direction that is angularly disposed relative to the first direction by a first angle that is between 10 and 85 degrees; and/or

fibers that are aligned in a fourth direction that is angularly disposed relative to the first direction by a second angle that is equal and opposite to the first angle; and

wherein:

for each of the plate and rim laminates, at least one of the laminae includes fibers aligned in the first direction and at least one of the laminae includes fibers aligned in the second, third, or fourth direction;

for at least one of the plate and rim laminates:

at least one of the laminae includes fibers aligned in the third direction; and

at least one of the laminae includes fibers aligned in the fourth direction;

for the laminae of the plate laminate, the first direction is parallel to a length of the housing and the second direction is parallel to a width of the housing, the width perpendicular to and less than or equal to 90% of the length; and

for the laminae of each of the rim laminate(s), the first direction is a circumferential direction disposed along the sidewall and the second direction is a binormal direction that is perpendicular to the circumferential direction.

4. The housing of claim 3, wherein for at least one of the plate and rim laminates:

the laminae include:

two or more 0-degree unidirectional laminae, each comprising fibers aligned in the first direction; and
two or more off-axis unidirectional laminae, each comprising fibers aligned in the third or fourth directions; and

the laminate includes an inner section disposed between first and second outer sections, each of the outer sections including at least one of the 0-degree laminae and the inner section including each of the off-axis laminae.

5. The housing of claim 3 or 4, wherein for the plate laminate:

at least one of the laminae includes fibers aligned in the third direction;
at least one of the laminae includes fibers aligned in the fourth direction; and
the first angle is between 15 and 45 degrees.

6. The housing of claim 5, wherein for the plate laminate the first angle is within 10 degrees of the arctangent of the width of the housing divided by the length of the housing.

7. The housing of any of claims 3-6, wherein for each of the rim laminate(s):

at least one of the laminae includes fibers aligned in the third direction; and
at least one of the laminae includes fibers aligned in the fourth direction.

8. The housing of claim 3 or 4, wherein:

for the plate laminate, at least one of the laminae includes fibers aligned in the second direction; and
for each of the rim laminate(s):

at least one of the laminae includes fibers aligned in the third direction; and
at least one of the laminae includes fibers aligned in the fourth direction.

9. The housing of any of claims 3-8, wherein for each of the plate and rim laminates, the laminate consists of the laminae and the fibers of each of the laminae consist of: fibers that are aligned in the first direction, fibers that are aligned in the second direction, fibers that are aligned in the third direction, and/or fibers that are aligned the fourth direction.

10. The housing of claim 9, wherein for at least one of the plate and rim laminates none of the laminae includes fibers that are aligned in the second direction.

11. The housing of any of claims 1-10, wherein the sidewall comprises one or more polymeric connecting members that are disposed along at least a majority of the periphery of the plate and on an interior surface of the rim, each of the connecting member(s) defining an interior surface of the sidewall.

12. The housing of claim 11, wherein each of the connecting member(s) comprises discontinuous fibers.

13. The housing of any of claims 1-12, wherein:

for the plate laminate, the fibers of each of the laminae comprise glass and/or ceramic fibers; and
for each of the rim laminate(s), the fibers of each of the rim laminate(s) comprise carbon and/or aramid fibers.

14. The housing of any of claims 1-13, wherein for each of the plate laminate and rim laminate(s) each of the laminae is a unidirectional lamina.

15. The housing of any of claims 1-14, wherein the width of the housing is less than or equal to 60% of the length of the housing.

**FIG. 1A**

**FIG. 1B**

**FIG. 1C**

**FIG. 1D**

10

62b
50b
62a

74b

70b

54

**FIG. 1E**

10

50b

74b

70b

60
62b
62a
54

**FIG. 1F**

90a
94
90b

58a 58a 58b 58b 58a 58a

66 66 66 66 66 66
62a 62a 62b 62b 62a 62a

50a

**FIG. 1G**

90a
94
90b

58a 58a 58b 58b 58a 58a

66 66 66 66 66 66
62a 62a 62b 62b 62a 62a

50b

**FIG. 1H**

**FIG. 2A**

**FIG. 2C**

**FIG. 2B**

**FIG. 2D**

**FIG. 2E**

FIG. 3A

FIG. 3B

FIG. 3C

FIG. 3D

FIG. 3E

**FIG. 4A**

**FIG. 4C**

**FIG. 4B**

**FIG. 4D**

**FIG. 4E**

FIG. 5

**FIG. 6A**

**FIG. 6B**

## FIG. 7A

## FIG. 7B

## FIG. 8

Europäisches
Patentamt

European
Patent Office

Office européen
des brevets

# EUROPEAN SEARCH REPORT

Application Number

EP 19 21 0145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 593 491 A1 (TORAY INDUSTRIES [JP]) 9 November 2005 (2005-11-09) * paragraph [0208]; examples 1-6 * * figures 14-15 * * paragraph [0208] * * paragraph [0188] * * paragraph [0195] * ----- | 1-15 | INV. B32B5/12 B32B5/26 |
| A | US 2012/049702 A1 (DIFONZO JOHN C [US] ET AL) 1 March 2012 (2012-03-01) * paragraph [0056] - paragraph [0058] * * figure 8 * ----- | 1-15 | |
| A | WO 2019/198015 A1 (SABIC GLOBAL TECHNOLOGIES BV [NL]) 17 October 2019 (2019-10-17) * claim 1 * * paragraph [0030] - paragraph [0031] * ----- | 1-15 | |
| A | EP 3 552 794 A1 (TORAY INDUSTRIES [JP]) 16 October 2019 (2019-10-16) * paragraph [0090] - paragraph [0091]; example 1 * ----- | 1-15 | TECHNICAL FIELDS SEARCHED (IPC) B32B |

The present search report has been drawn up for all claims

| Place of search | Date of completion of the search | Examiner |
|---|---|---|
| The Hague | 20 May 2020 | Flores de Paco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 0145

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2020

| Patent document cited in search report | | Publication date | Patent family member(s) | | Publication date |
|---|---|---|---|---|---|
| EP 1593491 | A1 | 09-11-2005 | AT | 549157 T | 15-03-2012 |
| | | | EP | 1593491 A1 | 09-11-2005 |
| | | | EP | 2153978 A1 | 17-02-2010 |
| | | | EP | 2153984 A1 | 17-02-2010 |
| | | | ES | 2379684 T3 | 30-04-2012 |
| | | | JP | 3906319 B2 | 18-04-2007 |
| | | | JP | WO2004060658 A1 | 11-05-2006 |
| | | | KR | 20050084499 A | 26-08-2005 |
| | | | KR | 20100018097 A | 16-02-2010 |
| | | | KR | 20100018098 A | 16-02-2010 |
| | | | TW | I304321 B | 11-12-2008 |
| | | | US | 2006110599 A1 | 25-05-2006 |
| | | | US | 2012094106 A1 | 19-04-2012 |
| | | | WO | 2004060658 A1 | 22-07-2004 |
| US 2012049702 | A1 | 01-03-2012 | NONE | | |
| WO 2019198015 | A1 | 17-10-2019 | WO | 2019198015 A1 | 17-10-2019 |
| | | | WO | 2019198016 A1 | 17-10-2019 |
| | | | WO | 2019198017 A1 | 17-10-2019 |
| EP 3552794 | A1 | 16-10-2019 | CN | 110062687 A | 26-07-2019 |
| | | | EP | 3552794 A1 | 16-10-2019 |
| | | | JP | WO2018110293 A1 | 24-10-2019 |
| | | | KR | 20190093566 A | 09-08-2019 |
| | | | TW | 201827203 A | 01-08-2018 |
| | | | US | 2019389174 A1 | 26-12-2019 |
| | | | WO | 2018110293 A1 | 21-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• UL 94 - Standard for Tests for Flammability of Plastic Materials for Parts in Devices and Appliances. UL Standards